# EUROPÄISCHE PATENTSCHRIFT

(11) **EP 3 190 134 B1**
(45) Veröffentlichungstag und Bekanntmachung des Hinweises auf die Patenterteilung: **24.06.2020**
(21) Anmeldenummer: 17150922.7
(22) Anmeldetag: 11.01.2017
(51) Int. Cl.: C08G 18/80, C08G 18/18, C08G 18/42

(54) **REAKTIONSSPRITZGUSSMASSE, DEREN VERWENDUNG SOWIE VERFAHREN ZU IHRER VERARBEITUNG**
REACTION INJECTION MOULDING SUBSTANCE, ITS USE AND METHOD FOR PROCESSING
SUBSTANCE MOULÉE PAR RÉINJECTION, SON UTILISATION ET SON PROCÉDÉ DE TRANSFORMATION

(30) Priorität: 11.01.2016 DE 102016000197
(43) Veröffentlichungstag der Anmeldung: 12.07.2017
(73) Patentinhaber: GKT Gräfenthaler Kunststofftechnik GmbH, 98743 Gräfenthal (DE)
(72) Erfinder: Gunzenheimer, Uwe, verstorben (DE)
(74) Vertreter: Engel, Christoph Klaus

(56) Entgegenhaltungen:
- EP-A1- 2 195 361
- JP-A- 2006 274 182
- US-A1- 2011 105 695
- Walter Caseri: "Polymilchsäure", RÖMPP, 1. Januar 2014 (2014-01-01), XP055371780, Gefunden im Internet: URL:https://roempp.thieme.de/roempp4.0/do/ data/RD-16-03438 [gefunden am 2017-05-11] & WALTER CASERI: "Poly(beta-hydroxyalkansäure)n", INTERNET CITATION, Dezember 2009 (2009-12), Seiten 1-2, XP002750846, Gefunden im Internet: URL:https://roempp.thieme.de/roempp4.0/do/ data/RD-16-03313 [gefunden am 2015-11-12]

## Beschreibung

Die Erfindung betrifft ein Reaktionsspritzgussmasse auf der Basis nachwachsender Rohstoffe, die während des Spritzgussprozesses durch eine chemische Reaktion vernetzt werden und die sich durch niedrige Spritztemperaturen und hohe mechanische Festigkeiten auszeichnen.

Das Reaktionsspritzguss-Verfahren (RIM, Reaction Injection Moulding) ist gut bekannt und wird vor allem mit Polyurethanen, Polyharnstoffen, Poly(urethanharnstoffen) oder Acrylaten angewandt. Bei diesen Verfahren werden traditionell auf Erdöl basierende Rohstoffe miteinander zur Reaktion gebracht und innerhalb kurzer Zeit im Werkzeug (auch als Form bezeichnet) ausgehärtet. Dabei gibt es verschiedene Varianten, von denen die Herstellung verstärkter Formteile durch Einsatz von Füllstoffen oder Fasergelegen in der Form (RRIM-Verfahren, Reinforced Reaction Injection Moulding) sowie die Einlage einer besonderen, später die Oberfläche des Formteils bildenden Schicht (In-Mould-Coating) genannt seien.

Weiterhin ist der Einsatz nachwachsender Rohstoffe beim Spritzguss bekannt. Hier werden insbesondere Polylactate (PLA, poly-lactic acid) und Polyhydroxyalkanoate (PHA) eingesetzt. Der Nachteil dieser Stoffe ist, dass die Spritztemperaturen in der Regel über 180°C, oft über 200°C liegen. Bisher sind nur Massen auf dieser Basis bekannt geworden, deren niedrigste Spritztemperatur bei 165°C liegt, indem Weichmacher auf Polyester-Basis zugesetzt werden, die jedoch die Eigenschaften der Formteile nachteilig beeinflussen, dafür die inhärente Sprödigkeit der PLA oder PHA teilweise beseitigen.

Auch der Einsatz von reaktiven Vernetzern bei auf nachwachsenden Rohstoffen basierenden Polymeren (Polyestern) ist bekannt geworden. Als solche Vernetzer werden z. B. Dicarbonsäuren, Triepoxide oder Diisocyanate beschrieben. Die Umsetzung der biologisch basierten Polyester mit den Vernetzern ist im Wesentlichen in Lösung oder bei der Reaktionsextrusion untersucht worden.

So werden z. B. in der WO 2011/071 666 A1 thermisch geformte Artikel auf der Basis von bio-basierten Materialien durch reaktive Extrusion durch Vernetzung von PHA und PLA zusammen in Gegenwart eines Additivs beschrieben, so dass das Harz eine Glasübergangstemperatur von mindestens 180°C, eine Wärmeformbeständigkeit von wenigstens 160°C aufweist.

In der US 2014/0128492 A1 werden Polyurethane aus Hydroxyalkanoat-Vernetzern, die ein Reaktionsprodukt aus einem Polyol, einem Isocyanat und einem Reaktionsprodukt aus einem 3-Hydroxyalkanoatester und einem Aminoalkohol mit mindestens einer primären oder sekundären Aminogruppe und wenigstens zwei Hydroxylgruppen sind, beschrieben.

In der US 6,753,384 B2 werden Polyurethane aus Hydroxyalkanoaten und Isocyanaten beschrieben, die das Reaktionsprodukt wenigstens eines Isocyanatgruppen aufweisenden Materials und wenigstens einer Verbindung mit wenigstens zwei aktiven Wasserstoffatomen sind, wobei die letztere Verbindung ein Hydroxyalkanoat enthält, das vorzugsweise ein thermisch oder biologisch abbaubares Polyhydroxyalkanoat ist.

In der US 5,756,651 und der US 5,908,918 werden Blends von Polycaprolacton und Polyethylenglykol mit PLA für Anwendungen von Verpackungsfolien mit Acetyltri-n-butylcitrat als Weichmacher sowie epoxidiertes Sojaöl als Mit-Weichmacher ausgewählt.

Eine weitere Möglichkeit der Vernetzung der biologisch basierten Polyester wird in der US 2015/0080503 A1 beschrieben, wonach umweltfreundliche Platten unter Verwendung von Polylactaten und Holzfasern und Verfahren zu deren Herstellung unter Verwendung einer Harzzusammensetzung aus einem Polylactat-Harz, einem Vernetzer und Holzfasern hergestellt werden, wobei der Vernetzer ein Peroxycarbonat ist, dass in der Presse bei 180°C das Polylactat vernetzt.

Weiterhin ist der Zusatz von Füllstoffen in Massen auf der Basis von nachwachsenden Rohstoffen bekannt. Als Füllstoffe werden sowohl anorganische als auch organische Stoffe eingesetzt. Die klassischen anorganischen Füllstoffe Kreide oder andere Formen von Calciumcarbonat werden in der Regel bevorzugt; diese werden in üblicher Form, in mikronisierter oder frisch gefällter Form verwendet, siehe z. B.

EP 2 417 179. Organische, auf nachwachsenden Rohstoffen basierende Füll- oder Verstärkungsstoffe überwiegen jedoch in den bekannt gewordenen Beschreibungen, z. B. Holzmehl, Lignin, Celluloseprodukte, Regeneratcellulose, Cellulose-Nanowhisker, Stärke oder modifizierte Stärke etc. Weiterhin werden zur Elastifizierung der PLA oder PHA oder Gemischen davon Polyester-Elastomere auf der Basis biologisch gewonnener Ausgangsprodukte eingesetzt.

Die Anwendung der Biopolymeren in Produkten der Automobilindustrie, der Elektrotechnik und als Verbrauchsmaterialien wird von D. Rosato in "Novel Advances in Bioplastics Additives and Formulation Emerging", SpecialChem March 12th, 2012 beschrieben. Es wird dabei insbesondere auf das Blending der Biopolymeren mit verschiedenen anderen Biomaterialien und auf den Einsatz von umweltfreundlichen Füllstoffen eingegangen. Bei den Füllstoffen ragen insbesondere Celluloseprodukte, Lignocellulose, mikrokristalline Cellulose und Cellulose-Nanowhisker heraus. Diese neu entwickelten Füllstoffe unterstützen die Verbesserung der thermomechanischen Eigenschaften sowie die Steifigkeit, die Zugfestigkeit und die Biegefestigkeit.

Durch Blending der PLLA mit Poly((R)-3-hydroxybutyrat) (PHB) und Tributylcitrat (TBC) als Weichmacher wurde nach A. M. El-Hadi, "Development of Novel Biopolymer Blends Based on Poly(L-lactic acid), Poly((R)-3-hydroxybutyrate), and Plasticizer", Polym. Engng. Sci. 54, 1394 - 1402 (2014) eine Erhöhung der Kettenmobilität und Erniedrigung der Tg auf 10°C in den Blends erreicht. Der Zusatz der PHB als Nukleirungsmittel zur PLLA führte zu kleineren Sphäruliten (Bionukleirung) und damit verbesserter Flexibilität und verbesserten Prozessverhaltens im Folienblasverfahren. Als hochreaktiver Verträglichkeitsverbesserer in PLA-Blends mit mikrokristalliner Cellulose wurde epoxidierte Citronensäure [Tris-(2,3-epoxypropoxy)citrat] im Bereich von 1 bis 5 Gew.-% Zusatz untersucht. Durch diese Verbindung wird die Grenzflächenadhäsion zwischen der PLA und den Mikropartikeln verbessert, und es werden dadurch die Materialeigenschaften erhöht, siehe Xinyan Dai, Zhu Xiong, Songqi Ma, Chao Li, Jinggang Wang, Haining Na, Jin Zhu, "Fabricating Highly Reactive Bio-based Compatibilizers of Epoxidized Citric Acid To Improve the Flexural Properties of Polylactide/Microcrystalline Cellulose Blends", Ind. Eng. Chem. Res. 54, 3806-3812 (2015).

Die Herstellung von Durchdringungsnetzwerken (IPN) durch Zusatz von monomeren Isocyanaten in Lactaten wurde ebenfalls beschrieben, siehe Hayato Takase, Ayaka Shibita and Mitsuhiro Shibata, "Semi-interpenetrating polymer networks composed of diisocyanate-bridged 4-arm star-shaped I-lactide oligomers and poly(ε-caprolactone)", Journal of Polymer Science Part B: Polymer Physics, Vol. 52, Issue 21, pages 1420-1428 (2014). Durch Anwendung bestimmter Mischungsverhältnisse wird die Verträglichkeit der Lactide und des Polycaprolactons verbessert sowie die Glasübergangstemperatur der Massen erhöht. In einer weiteren Untersuchung werden Isocyanat-Oligomere (Prepolymere) auf der Basis von 4,4'-Diphenylmethandiisocyanat zur Verbesserung der Zähigkeit von PLA eingesetzt, siehe Xu Zhang, Ernest Koranteng, Zhengshun Wu and Qiangxian Wu, "Structure and properties of polylactide toughened by polyurethane prepolymer", Journal of Applied Polymer Science Volume 133, Issue 7, February 15, 2016. Weiterhin sind aus Lösungsmitteln gegossene Filme aus PLA und Polyethylenglykolen sowie mit Ethylcellusolve blockierten Isocyanaten bekannt geworden, siehe T. Shen, M. Lu, D. Zhou, L. Liang, "Effect of reactive blocked polyisocyanate on the properties of solvent cast blends from poly(lactic acid) and poly(ethylene glycol)", J. Appl. Polym. Sci. 125(3):2071-77 (2012). Dadurch sollen die Kristallinität erhöht, der Speichermodul und die Wärmebeständigkeit der Materialien erhöht werden.

Es wurden demzufolge viele Verfahren untersucht, um die Eigenschaften biologisch basierter Polyester zu modifizieren, wobei die inhärenten Probleme dieser Materialien, ihre Sprödigkeit, Kristallinität und thermische Empfindlichkeit oder Unverträglichkeit mit Zusätzen anderer Polymerer im Mittelpunkt stehen. Es wurde jedoch kein Verfahren oder keine Masse bekannt, die sich bei Temperaturen unter 120°C verarbeiten lässt und nach der Verarbeitung hochwertige Produkte mit guten Gebrauchseigenschaften ergibt.

Die allgemeine Zielstellung der vorliegenden Erfindung ergibt sich aus dem Bedürfnis an einer Reaktionsspritzgussmasse auf biologischer Basis, die sich zur Verarbeitung unterhalb von 130°C eignet. Die Aufgabe der Erfindung ist es demnach, eine Reaktionsspritzgussmasse zur Verarbeitung bei Temperaturen unterhalb 130°C auf der Basis im Wesentlichen nachwachsender Rohstoffe zur Verfügung zu stellen. Weiterhin besteht eine Aufgabe darin, ein Verfahren zur Verarbeitung dieser Reaktionsspritzgussmasse anzugeben.

Erfindungsgemäß wird die Aufgabe durch eine Reaktionsspritzgussmasse mit den Merkmalen des Anspruchs 1 gelöst.

Die Erfindung stellt eine neuartige Mischung von Biopolyestern bereit. Dabei ist die Verwendung von reinen Stellungsisomeren als Komponente A (insbesondere der PLLA) entscheidend, wodurch sich bei einem bestimmten Mischungsverhältnis mit Komponente B (nämlich P(D)LA oder einem Isomerengemisch PLA (D- und L-Isomere)) eine Schmelztemperatur nach DSC von unter 110°C einstellen lässt.

Der Zusatz von PHBV oder PBS ist dafür nicht grundsätzlich erforderlich, dient aber der Einstellung von gewünschten physikalischen Eigenschaften.

Zwar waren Di- oder Triisocyanate mit Blockierung grundsätzlich bekannt. Was bisher nicht beschrieben wurde, sind auf Basis trimerisierter aliphatischer und/ oder cycloaliphatischer Diiso-cyanate (symmetrisch oder asymmetrisch trimerisiert) bei Temperaturen unter 165°C (in der Regel unter 140°C) deblockierende Triisocyanate. Diese stellen eine neue Gruppe blockierter Isocyanate dar.

Die Reaktionsspritzgussmassen umfassen
- ein oder mehrere linearere Polyester (A), insbesondere PLLA;
- ein oder mehrere linearere Polyester (B), insbesondere Poly(3-hydroxybutyrat) (PHB);
- ein oder mehrere linearere Polyester (C), insbesondere Copolymere wie Poly(hydroxy-butyrat-valerat);
- ein oder mehrere oligomere Polyester (D);
- ein oder mehrere trifunktionelle Polyester (Weichmacher) (E), insbesondere verzweigte Moleküle wie Tributylcitrat (TBC), Tributylisocitrat, Oxalbernsteinsäuretributylester oder Aconitsäureester;
- ein oder mehrere blockierte Di- und/oder Polyisocyanate (F), insbesondere mit Malonsäureestern oder Bernsteinsäureestern blockierte trimerisierte aliphatische oder cycloaliphatische Diisocyanate; und
- ein oder mehrere anorganische und/oder organische Additive (G1, G2), insbesondere Cellulose-Nanowhisker, mikrokristalline Cellulose, weitere nanoskalige oder mikrosierte anorganische Stoffe, Pigmente, Farbstoffe.

Zur Unterscheidung von "Oligomer" und "Polymer" ist die Definition nach REACH (Verordnung (EG) Nr. 1907/2006) heranzuziehen, wonach alle Stoffe mit >3 wiederkehrenden Struktureinheiten als Polymer bezeichnet und klassifiziert werden; in der Polymerchemie werden dagegen Stoffe mit >2 und <8 wiederkehrenden Struktureinheiten als Oligomere bezeichnet. Weiterhin werden Verbindungen mit >2 funktionellen Gruppen (auch Estergruppen im Molekül) als "polyfunktionell" bezeichnet.

Die Herstellung und Verarbeitung der Spritzgussmassen zeichnet sich dadurch aus, dass ein vorgemischtes Granulat aus
einem oder mehreren lineare Polyestern (A),
einem oder mehreren lineare Polyestern (B),
einem oder mehreren lineare Polyestern (C),
einem oder mehreren oligomeren Polyestern (D),
einem oder mehreren trifunktionellen Polyestern (E),
einem oder mehreren blockierten Di- und/oder Polyisocyanaten (F) und
einem oder mehreren anorganischen (G1) und/oder organischen Additiven (G2)
bei einer Temperatur zwischen 70 und 140°C in einer Spritzgießmaschine homogenisiert und in ein geeignetes Werkzeug gespritzt wird.

Hier ist das Ziel ist die Verarbeitung bei T<120°C unter Vernetzung durchzuführen, um dadurch die erforderliche Temperaturstabilität zu erhalten.

Der Prozess wird in zwei bis drei Stufen durchgeführt, d.h.
- in der ersten Stufe wird ein Gemisch aus A und B hergestellt, das einen Schmelzpunkt unter 120°C hat;
- in der zweiten Stufe werden dieser Mischung die festen Additive G zugemischt, ggf. in Verbindung mit den Oligomeren D und/oder den Weichmachern E; und
- in der dritten Stufe werden die blockierten Triisocyanate bei einer Temperatur gerade oberhalb der Schmelztemperatur zugemischt (die Zersetzungstemeperatur der blockierten Isocyanate liegt bei 135°CF bis 160°C)

Das Gemisch wird dann in der Spritzgießmaschine verarbeitet, sodass während des Spritzvorgangs die Spalttemperatur des Isocyanats und dessen Re4aktion mit den Polyestern (und zwar mit allen, die eine Hyfroxylfunktion aufweisen) ablaufen. Im Ergebnis wird ein vernetztes, biologisches Spritzgussmaterial gebildet, dessen Erweichungspunkt nunmehr oberhalb des ursprünglichen Schmelzpunktes liegt (in der Regel T_{g}>100°C, T_{E}>180°C).

Die Biopolyester A - C basieren auf Milchsäure, Valeriansäure und/oder Buttersäure, Polyester D basiert auf Bersteinsäure, Adipinsäure und aus Biorohstoffen hergestellten Diolen, Polyester basiert auf Citronensäure (ggf. acetyliert) und Propandiol, das auch biologisch hergestellt wird, alles biologisch hergestellte Produkte (enzymatisch aus Zuckern, Lignin, Cellulose). Die Diisocyanate F basieren auf biotechnologisch hergestelltem Caprolactam.

Eine bevorzugte Verwendung der Reaktionsspritzgussmassen besteht darin, dass die Reaktionsspritzgussmassen zur simultanen Umhüllung elektrischer oder elektronischer Module oder Schaltungen oder Leiterplatten und als Einbettmassen eingesetzt werden.

Die Reaktionsspritzgussmassen sind herstellbar aus linearen Polyestern A, B, C, aus oligomeren Polyestern D, aus trifunktionellen Polyestern E, blockierten Di- und/oder Polyisocyanaten F und anorganischen und/oder organischen Additiven G, wobei der lineare Polyester A ein L-Polylactid, der lineare Polyester B ein DL-Polylactid, der lineare Polyester C ein oder ein Copolyester aus mindestens zwei biologisch herstellbaren Hydroxycarbonsäuren oder ein Poly(butylen-succinat-co-L-lactate) (PBSL), der oligomere Polyester D ein Polybutylensuccinat oder ein Polyalkylenadipat, der trifunktionelle Polyester E ein Citronensäureester oder Acetyl-tris(hydroxypropyl)citrat, das blockierte Di-und/oder Polyisocyanat F ein mit Diethylmalonat blockiertes lineares Diisocyanat, ein mit Diethylmalonat blockiertes trimerisiertes aliphatisches Diisocyanat oder ein mit Diethylmalonat blockiertes trimerisiertes Hexamethylendiisocyat, das anorganische Additiv G1 Calcit, Basaltfaser und das organische Additiv G2 mikrokristalline Cellulose, Cellulose-Nanowhisker, Regeneratcellulosefasern oder Holzmehl.

Vorteilhafterweise umfassen die Reaktionsspritzgussmassen in einer weiteren Ausgestaltung zusätzlich ein oder mehrere Katalysatoren (H) und weitere Hilfsstoffe (I).

Eine Weiterbildung des Herstellungsverfahrens zeichnet sich dadurch , dass zusätzlich ein oder mehrere Katalysatoren (H) und weitere Hilfsstoffe (I) in das Granulat eingebracht werden.

Eine verfahrensmäßige Ausgestaltung besteht darin, dass ein Granulat hergestellt wird aus
(a) 70 - 80 Teilen eines oder mehrerer linearer Biopolyester (A) ;
(b) 20 - 30 Teilen eines oder mehrerer linearer Biopolyester (B) ;
(c) 1 - 25 Teilen eines oder mehrerer linearer Biopolyester (C) ;
(d) 0,5 - 15 Teilen eines oder mehrerer oligomerer Biopolyester (D);
(e) 0,5 - 15 Teilen eines oder mehrerer trifunktioneller Biopolyester (E);
(f) 0,5 - 20 Teilen eines oder mehrerer blockierter Di- und/oder Polyisocyanate (F);
(g) 0,5 - 50 Teilen eines oder mehrerer anorganischer und/oder organischer Additive (G);
(h) 0 - 5 Teile eines oder mehrerer Katalysatoren sowie (H);
(i) ggf. weiteren Hilfsstoffen (I);
derart, dass diese sich immer zu 100 Teilen ergänzen, und dieses Granulat unmittelbar nach seiner Herstellung oder zu einem späteren Zeitpunkt auf einer Spritzgießmaschine bei 70 bis 140°C in geeignete Werkzeuge gespritzt wird.

Eine weitere Ausgestaltung sieht vor, dass dem Granulat 0 - 5 Teile eines oder mehrerer Katalysatoren (H) sowie weitere Hilfsstoffe (I) während des Compoundingprozesses zugemischt werden.

Eine Weiterbildung ist dadurch gekennzeichnet, dass mit den Reaktionsspritzgussmassen eine Einbettung und simultan eine Hülle um die elektrischen oder elektronischen Module erzeugt wird.

Als linearere Polyester (A) werden L-Polylactat oder L-Polylactid mit einer Schmelztemperatur von >160°C, Poly(3-hydroxybutyrate), Polyhydroxyalkanoate, Copolymere verschiedener Hydroxycarbonsäuren, z. B. Poly(hydroxyvaleratco-butyrate) mit Schmelzpunkten oberhalb 160°C, Poly(3-hydroxy-butyrate-co-3-hydroxyvalerate) (PHBV) usw. verwendet. Bevorzugt werden L-PLA-Typen.

Als lineare Biopolyester (B) werden DL-Polylactate (DL-PLA) bevorzugt, die im Gemisch mit dem oder den Polyestern (A) eine Schmelzpunkterniedrigung ergeben oder ein niedrig schmelzendes Eutektikum aufweisen. Bevorzugt werden Gemische aus L-PLA und DL¬PLA mit Verhältnissen von 100: 1 bis 1,2 : 1.

Als lineare Biopolyester (C) werden Copolyester aus mindestens zwei biologisch herstellbaren Hydroxycarbonsäuren, z. B. Poly(hydroxy-butyrat-valerate) unterschiedlicher Verhältnisse der Hydroxycarbonsäuren und unterschiedlicher Molmassen im Bereich von Mₙ = 8.000 bis 10.000.000 Dalton, Poly(butylensuccinat-co-L-lactate) (PBSL), Polycaprolactone, Poly(3-hydroxybutyrat-co-3-hydroxyhexanoate) (PHBHHx), eingesetzt.

Als oligomere Biopolyester (D) werden solche insbesondere auf der Basis Adipinsäure, Sebacinsäure, Bernsteinsäure, auch in Gemischen und auch in Gemischen mit Milchsäure, Hydroxybuttersäure oder Hydroxyvaleriansäure eingesetzt, z. B. Polybutylsuccinat, Polybutylsebacat, Polybutyladipinat usw.

Als trifunktionelle Biopolyester (E) werden verschiedene Ester der Citronensäure bevorzugt, obwohl auch andere trifunktionelle Ester möglich sind, z. B. abgeleitet von Hexantriol oder Trimethylolpropan. Bevorzugt werden Acetyltributylcitrat, Tributylcitrat, Tris-(2-hydroxypropyl)citrat, Tripropylcitrat, Tris-(2,3-epoxypropyl)citrat, Acetyl-tris-(2-hydroxypropyl)citrat, Acetyl-tris-(2,3-epoxypropyl)citrat etc.

Als blockierte Di- und/oder Polyisocyanate (F) werden mit t-Butanol, Caprolactam, Ethylcellusolve, Malonsäureestern, Diethylmalonat, Triazol- und Pyrazolderivate wie 3,5-Dimethylpyrazol, Methyl-ethyl-ketoxim (Butanonoxim), Benzyl-t-butylamin umgesetzte und damit blockierter Di- und/oder Polyisocyanate verwendet.

Als Di- und/oder Polyisocyanate werden aliphatische Diisocyanate wie Isophorondiisocyanat (IPDI), Hexamethylendiisocyanat (HDI), Diisocyanatodicyclohexylmethan (H12MDI), Allophanate oder Biurete dieser Isocyanate wie HDI-Biuret, HDI-Allophanat, oder HDI-Allophanat-Trimer, symmetrische oder asymmetrische Trimere des HDI, des IPDI oder des H12MDI, araliphatische Diisocyanate wie Xylylendiisocyanat, aromatische Diisocyanate wie Toluendiisocyanate (TDI), Diphenylmethan-4,4'-diisocyanat (MDI), rohes (polymeres) MDI, Isocyanurate des Toluendiisocyanats (TDII), Diphenylmethane-4,4'-diisocyanat (MDI), Triisocyate wie 4,4'- Tris(p-isocyanatophenyl)thiophosphate, Triphenylmethane-4,4',4"-triisocyanat eingesetzt.

Weiterhin können oligomere Umsetzungsprodukte der Di- und/oder Polyisocyanate mit Alkoholen und/oder Aminen eingesetzt werden, z. B. aliphatische Polyisocyanat-Prepolymere basierend auf Isophorondiisocyanat oder Hexamethylendiisocyanat. Außerdem sind silan-funktionelle aliphatische Polyisocyanate basierend auf Hexamethylendiisocyanat geeignet.

Eine weitere Gruppe stellen die Uretdione dar, d. h. Dimere der Isocyanate, sofern sie bei relativ niedriger Temperatur wieder in die Monomeren zurück gespalten werden können, z. B. HDI-Uretdion oder IPDI-Uretdion.

Als anorganische und/oder organische Additive (G) werden vorzugsweise mikronisierte oder nanoskalige partikuläre Feststoffe oder faserförmige Feststoffe insbesondere auf Cellulosebasis eingesetzt. Als anorganische Feststoffe wird Calciumcarbonat in verschiedenen Modifikationen bevorzugt, z. B. Calcit, Kreide, Kalksteinmehl oder Marmormehl. Weiterhin sind faserförmige anorganische Materialien wie Gesteinswolle, Basaltwolle etc. geeignet. Als organische Materialien werden Regeneratcellulose in Form von mikronisiertem Pulver oder als Fasern, mikrokristalline Cellulose oder Cellulose-Nanowhisker verwendet.

Den so zusammengesetzten Massen können außerdem Katalysatoren (H) zur Beschleunigung der Rückspaltung der Di-und/oder Polyisocyanate und der Beschleunigung der Isocyanat-Hydroxyl-Reaktion zugesetzt werden. Solche Katalysatoren sind bekannt; es können tertiäre Amine und/oder metallorganische Verbindungen eingesetzt werden. Als tertiäre Amine sind besonders geeignet 1,8-Diazabicyclo[5.4.0]undecen-7, Dimorpholinodiethylether, N-Methylimidazol, N,N.N',N'-Tetramethylguanidin, Bis-(2-dimethylaminomethyl)ether, Tris-N,N,N-(3-N,N-dimethylaminopropyl)hexahydro-1,3,5-triazin usw.; als metallorganische Verbindungen sind z. B. geeignet Zinndioctoat, Dimethykzinndimercaptid, Di-n-octylzinndicarboxylat usw.

Weitere Zusatz- und Hilfsstoffe (I) sind möglich, z. B. Farbstoffe, Pigmente oder Hydrophobierungsmittel wie natürliche Öle oder Derivate natürlicher Öle, z. B. epoxydiertes Sojaöl.

Die Herstellung der Massen erfolgt durch Vermischen im Tumbler oder Compounder zu Granulaten. Diese Mischgranulate werden in den Aufgabetrichter der Spritzgießmaschine eingegeben, wobei die Temperatur zwischen 0 und 75°C betragen kann, Umgebungstemperatur bevorzugt wird. Nach der Eingabe der Granulate werden diese in die 3 bis 11 Heizzonen der Maschine zum Aufschmelzen und Homogenisieren geführt, wobei die Heizzonen gleiche oder unterschiedliche Temperaturen aufweisen können. Die Temperaturen der Heizzonen sollen zwischen 70 und 140°C liegen, so dass das Material nicht geschädigt wird, jedoch hoch genug sein, damit eine vollständige Homogenisierung stattfindet.

Ein bevorzugtes Verfahren zur Verarbeitung der Spritzgussmassen besteht darin, dass ein vorgemischtes Granulat aus
(a) einem oder mehreren linearen Biopolyestern (A);
(b) einem oder mehreren linearen Biopolyestern (B);
(c) einem oder mehreren linearen Biopolyestern (C);
(d) einem oder mehreren oligomeren Biopolyestern (D);
(e) einem oder mehreren trifunktionellen Biopolyestern (E);
(f) einem oder mehreren blockierten Di- und/oder Polyisocyanaten (F);
(g) einem oder mehreren anorganischen und/oder organischen Additiven (G);
(h) ggf. einem oder mehreren Katalysatoren (H);
(i) ggf. weiteren Hilfsstoffen (I);
bei einer Temperatur zwischen 70 und 140°C in einer Spritzgießmaschine homogenisiert und in ein geeignetes Werkzeug gespritzt wird.

Die Werkzeugtemperatur soll dabei zwischen 20 und 100°C liegen; die Temperierung des Werkzeugs erfolgt durch einen Wärmeträger, z. B. Wasser, oder durch isotherme Temperierung.

Eine bevorzugte Variante des Verfahrens besteht darin, dass ein Granulat hergestellt wird aus
(a) 70 - 80 Teilen eines oder mehrerer linearerer Polyester (A) ;
(b) 20 - 30 Teilen eines oder mehrerer linearerer Polyester (B) ;
(c) 1 - 25 Teilen eines oder mehrerer linearerer Polyester (C) ;
(d) 0,5 - 15 Teilen eines oder mehrerer oligomerer Polyester (D) ;
(e) 0,5 - 15 Teilen eines oder mehrerer trifunktioneller Polyester (E);
(f) 0,5 - 20 Teilen eines oder mehrerer blockierter Di- und/oder Polyisocyanate (F);
(g) 0,5 - 50 Teilen eines oder mehrerer anorganischer und/oder organischer Additive (G);
(h) 0 - 5 Teile eines oder mehrerer Katalysatoren sowie;
(i) ggf. weiteren Hilfsstoffen;
derart, dass diese sich immer zu 100 Teilen ergänzen, und dieses Granulat unmittelbar nach seiner Herstellung oder zu einem späteren Zeitpunkt auf einer Spritzgießmaschine bei 70 bis 140°C in geeignete Werkzeuge gespritzt wird.

Insbesondere werden die erfindungsgemäßen Spritzgussmassen dazu eingesetzt, dass elektrische oder elektronische Module oder Schaltungen oder Leiterplatten usw. mit den Massen als Einbettmassen eingehüllt und simultan eine Hülle um diese Module erzeugt wird, so dass ein weiterer Arbeitsgang entfallen kann. Diese Hüllen können als Schalen, Gehäuse oder komplexe Gebilde ausgeführt sein und zeichnen sich durch eine hohe Festigkeit, gute Haptik und Stabilität gegen Umwelteinflüsse aus.

### Ausführungsbeispiel

In einem Tumbler werden folgende Stoffe miteinander vermischt:

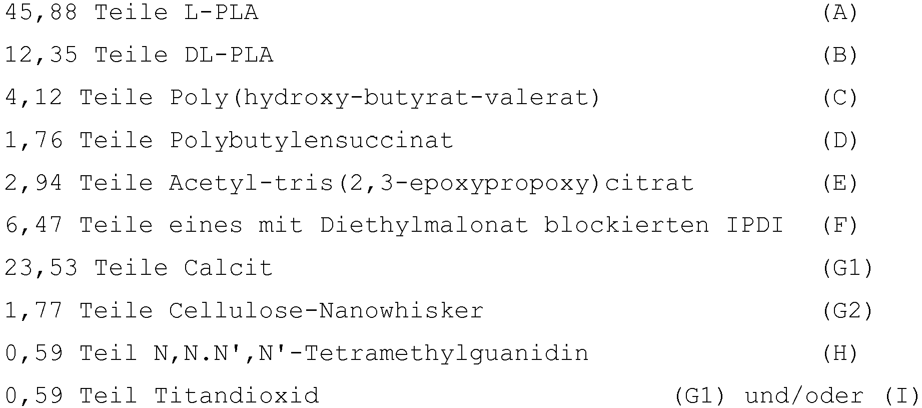

Das so hergestellte Granulat mit einem Teilchendurchmesser von 4 bis 7,5 mm wird bei Umgebungstemperatur in den Aufgabetrichter einer Ferromatic Milacron K-TEC 110 S Spritzgießmaschine mit 110 MPa Schließkraft gegeben und in die Heizzonen gefördert, von denen die Heizzone 1 eine Temperatur von 80°C, die Heizzonen 2 bis 5 110°C, die Heizzone 6 120°C aufweist und sofort in eine auf 30°C temperierte Schalenform mit einem Volumen von 78 cm³ mit einem eingelegten und stabilisierten elektronischen Modul gespritzt. Man erhält ein homogen weißes Formteil mit glatter Oberfläche, das bis zu 85°C stabil ist.

## Patentansprüche

1. Reaktionsspritzgussmasse umfassend
- ein oder mehrere lineare Biopolyester (A), ausgewählt aus der Gruppe
∘ L-Polylactat oder L-Polylactid mit einer Schmelztemperatur von > 160°C,
∘ Poly(3-hydroxybutyrate), Polyhydroxyalkanoate, Copolymere verschiedener Hydroxycarbonsäuren, insbesondere Poly(hydroxyvalerat-co-butyrate), mit Schmelzpunkten oberhalb 160°C,
∘ Poly(3-hydroxy-butyrate-co-3-hydroxyvalerate) (PHBV);
- eine oder mehrere lineare Biopolyester (B), ausgewählt aus der Gruppe der DL-Polylactate (DL-PLA), die im Gemisch mit dem oder den Biopolyestern (A) eine Schmelzpunkterniedrigung ergeben oder ein niedrig schmelzendes Eutektikum aufweisen;
- ein oder mehrere lineare Biopolyester (C), ausgewählt aus der Gruppe
∘ ein Copolyester aus mindestens zwei biologisch herstellbaren Hydroxycarbonsäuren, nämlich Poly(hydroxy-butyrat-valerate) unterschiedlicher Verhältnisse der Hydroxycarbonsäuren und unterschiedlicher Molmassen im Bereich von Mₙ = 8.000 bis 10.000.000 Dalton,
∘ Poly(butylen-succinat-co-L-lactate) (PBSL), Polycaprolactone, Poly(3-hydroxybutyrat-co-3-hydroxyhexanoate) (PHBHHx);
- ein oder mehrere oligomere Biopolyester (D) auf der Basis von Adipinsäure, Sebacinsäure, oder Bernsteinsäure;
- ein oder mehrere trifunktionelle Biopolyester (E), ausgewählt aus der Gruppe
∘ Ester der Citronensäure,
∘ trifunktionelle Ester, die abgeleitet sind von Hexantriol oder Trimethylolpropan;
∘ Acetyltributylcitrat,
∘ Tributylcitrat,
∘ Tris-(2-hydroxypropyl)citrat,
∘ Tripropylcitrat,
∘ Tris-(2,3-epoxypropyl)citrat,
∘ Acetyl-tris-(2-hydroxypropyl)citrat,
∘ Acetyl-tris-(2,3-epoxypropyl)citrat;
- ein oder mehrere blockierte Di- und/oder Polyisocyanate (F) ;
- ein oder mehrere anorganische und/oder organische Additive (G1, G2).

2. Reaktionsspritzgussmassen nach Anspruch 1, **dadurch gekennzeichnet, dass**
- das blockierte Di-und/oder Polyisocyanat (F) ein mit Diethylmalonat blockiertes lineares Diisocyanat, ein mit Diethylmalonat blockiertes trimerisiertes aliphatisches Diisocyanat oder ein mit Diethylmalonat blockiertes trimerisiertes Hexamethylendiisocyat,
- das anorganische Additiv (G1) Calcit, Basaltfaser und
- das organische Additiv (G2) mikrokristalline Cellulose, Cellulose-Nanowhisker, Regeneratcellulosefasern oder Holzmehl ist.

3. Reaktionsspritzgussmasse nach Anspruch 1 oder 2, zusätzlich umfassend
- ein oder mehrere Katalysatoren (H)
- und weitere Hilfsstoffe (I).

4. Reaktionsspritzgussmasse nach einem der Ansprüche 1 bis 3, **dadurch gekennzeichnet, dass** folgende Mengenverhältnisse vorliegen:
- 70 - 80 Teile des Biopolyesters (A),
- 20 - 30 Teile des Biopolyesters (B),
- 1 - 25 Teile des Biopolyesters (C),
- 0,5 - 15 Teile des Biopolyesters (D),
- 0,5 - 15 Teile des Biopolyesters (E),
- 0,5 - 20 Teile der Di- und/oder Polyisocyanate (F),
- 0,5 - 50 Teile anorganischer und/oder organischer Additive (G),
- 0 - 5 Teile des Katalysators, sowie
- ggf. weitere Hilfsstoffe,
derart, dass diese Bestandteile sich immer zu 100 Teilen ergänzen.

5. Reaktionsspritzgussmasse nach einem der Ansprüche 1 bis 4, **dadurch gekennzeichnet, dass** sie als ein Granulat bereitgestellt ist.

6. Verfahren zur Verarbeitung der Reaktionsspritzgussmasse gemäß einem der Ansprüche 1 bis 5, **dadurch gekennzeichnet, dass** ein vorgemischtes Granulat aus den angegebenen Bestandteilen bereit gestellt, bei einer Temperatur zwischen 70 und 140°C in einer Spritzgießmaschine homogenisiert und in ein geeignetes Werkzeug gespritzt wird.

7. Verfahren nach Anspruch 6, **dadurch gekennzeichnet, dass**
- zusätzlich ein oder mehrere Katalysatoren (H)
- und weitere Hilfsstoffe (l) in das Granulat eingebracht werden.

8. Verfahren nach einem der Ansprüche 6 bis 7, **dadurch gekennzeichnet, dass** dem Granulat 0 - 5 Teile eines oder mehrerer Katalysatoren (H) sowie weitere Hilfsstoffe (I) während des Compoundingprozesses zugemischt werden.

9. Verwendung einer Reaktionsspritzgussmasse gemäß einem der Ansprüche 1 bis 5 als Umhüllung oder als Einbettmasse für elektrische oder elektronischer Module, Schaltungen oder Leiterplatten.

10. Verwendung nach Anspruch 9, **dadurch gekennzeichnet, dass** die Reaktionsspritzgussmasse simultan als Einbettmasse und als Umhüllung dient.

## Claims

1. Reaction injection moulding compound comprising
- one or more linear biopolyesters (A) selected from the group
∘ L-polylactate or L-polylactide having a melting temperature of > 160 °C,
∘ poly(3-hydroxybutyrate), polyhydroxyalkanoate, copolymers of various hydroxycarboxylic acids, in particular poly(hydroxyvalerate-co-butyrate), with melting points above 160 °C,
∘ poly(3-hydroxybutyrate-co-3-hydroxyvalerate) (PHBV);
- one or more linear biopolyesters (B) selected from the group of DL-polylactates (DL-PLA) which, when mixed with the one or more biopolyester(s) (A), result in a lowering of the melting point or have a low-melting eutectic;
- one or more linear biopolyesters (C) selected from the group
∘ a copolyester of at least two biologically producible hydroxycarboxylic acids, namely poly-(hydroxy-butyrate-valerate) with different hydroxycarboxylic acid ratios and different molar masses in the range from Mₙ = 8,000 to 10,000,000 Dalton,
∘ poly(butylene succinate-co-L-lactate) (PBSL); polycaprolactone, poly(3-hydroxybutyrate-co-3-hydroxyhexanoate) (PHBHHx);
- one or more oligomeric biopolyesters (D) based on adipic acid, sebacic acid or succinic acid;
- one or more trifunctional biopolyesters (E) selected from the group
∘ esters of citric acid,
∘ trifunctional esters derived from hexanetriol or trimethylolpropane;
∘ acetyltributyl citrate,
∘ tributyl citrate,
∘ Tris-(2-hydroxypropyl) citrate,
∘ tripropyl citrate,
∘ Tris-(2,3-epoxypropyl) citrate,
∘ acetyl-tris-(2-hydroxypropyl) citrate,
∘ acetyl-tris-(2,3-epoxypropyl) citrate;
- one or more blocked di- and/or polyisocyanates (F);
- one or more inorganic and/or organic additives (G1, G2) .

2. Reaction injection moulding compounds according to Claim 1, **characterized in that**
- the blocked di- and/or polyisocyanate (F) is a linear diisocyanate blocked with diethyl malonate, a trimerised aliphatic diisocyanate blocked with diethyl malonate, or a trimerised hexamethylene diisocyanate blocked with diethyl malonate,
- the inorganic additive (G1) is calcite, basalt fibre, and
- the organic additive (G2) is microcrystalline cellulose, cellulose nanowhiskers, regenerated cellulose fibres or wood flour.

3. Reaction injection moulding compound according to Claim 1 or 2, additionally comprising
- one or more catalysts (H)
- and other additives (I).

4. Reaction injection moulding compound according to any one of Claims 1 to 3, **characterized in that** the following proportions are present:
- 70 - 80 parts biopolyester (A),
- 20 - 30 parts biopolyester (B),
- 1 - 25 parts biopolyester (C),
- 0.5 - 15 parts biopolyester (D),
- 0.5 - 15 parts biopolyester (E),
- 0.5 - 20 parts di- and/or polyisocyanates (F),
- 0.5 - 50 parts inorganic and/or organic additives (G),
- 0 - 5 parts catalyst, and
- optionally further additives,
in such manner that said components always add up to 100 parts.

5. Reaction injection moulding compound according to any one of Claims 1 to 4, **characterized in that** it is provided in the form of a granulate.

6. Method for processing the reaction injection moulding compound according to any one of Claims 1 to 5, **characterized in that** a premixed granulate of the specified ingredients is provided, homogenised in an injection moulding machine at a temperature between 70 and 140 °C, and injected into a suitable tool.

7. Method according to Claim 6, **characterized in that**
- additionally one or more catalysts (H)
- and further additives (I) are introduced into the granulate.

8. Method according to one of Claims 6 to 7, **characterized in that** 0 - 5 parts of one or more catalysts (H) and further additives (I) are mixed into the granulate during the compounding process.

9. Use of a reaction injection moulding compound according to any one of Claims 1 to 5 as a sheathing or encapsulating material for electrical or electronic modules, circuits or printed circuit boards.

10. Use according to Claim 9, **characterized in that** the reaction injection moulding compound serves simultaneously as an encapsulating compound and a sheathing material.

## Revendications

1. Composition réactive de moulage par injection, comprenant
- un ou plusieurs biopolyesters (A) linéaires, sélectionnés dans le groupe comprenant
∘ un L-polylactate ou un L-polylactide ayant une température de fusion de > 160 °C,
∘ des poly(3-hydroxybutyrates), des polyhydroxyalcanoates, des copolymères de différents acides hydroxycarboxyliques, notamment des poly(hydroxyvalérate-co-butyrates), ayant des points de fusion supérieurs à 160 °C,
∘ des poly(3-hydroxy-butyrate-co-3-hydroxyvalérates) (PHBV) ;
- un ou plusieurs biopolyesters (B) linéaires, sélectionnés dans le groupe des DL-polylactates (DL-PLA), qui en mélange avec le ou les biopolyesters (A) mènent à un abaissement du point de fusion ou présentent un eutectique à bas point de fusion ;
- un ou plusieurs biopolyesters (C) linéaires, sélectionnés dans le groupe comprenant
∘ un copolyester d'au moins deux acides hydroxycarboxyliques, susceptibles d'être préparés par voie biologique, à savoir des poly(hydroxy-butyrate-valérates) avec différents ratios d'acides hydroxycarboxyliques et différentes masses molaires de l'ordre de Mₙ = de 8.000 à 10.000.000 daltons,
∘ des poly(butylène-succinate-co-L-lactates) (PBSL), des polycaprolactones, des poly(3-hydroxybutyratco-3-hydroxyhéxanoates) (PHBHHx) ;
- un ou plusieurs biopolyesters (D) oligomères sur la base de l'acide adipique, de l'acide sébacique ou de l'acide succinique ;
- un ou plusieurs biopolyesters (E) trifonctionnels, sélectionnés dans le groupe comprenant
∘ des esters de l'acide citrique,
∘ des esters trifonctionnels, qui sont dérivés de l'hexanetriol ou du triméthylolpropane ;
∘ un acétylcitrate de tributyle,
∘ un citrate de tributyle,
∘ un tris-(2-hydroxypropyl)citrate,
∘ un citrate de tripropyle,
∘ un tris-(2,3-epoxypropyl)citrate,
∘ un acétyle-tris-(2-hydroxypropyl)citrate,
∘ un acétyle-tris-(2,3-epoxypropyl)citrate ;
- un ou plusieurs diisocyanates et/ou polyisocyanates bloqués (F) ;
- un ou plusieurs additifs inorganiques et/ou organiques (G1, G2).

2. Composition réactive de moulage par injection selon la revendication 1, **caractérisée en ce que**
- le diisocyanate et/ou polyisocyanate bloqué (F) est un diisocyanate linéaire bloqué avec un malonate de diéthyle, un diisocyanate aliphatique trimérisé bloqué avec un malonate de diéthyle ou un diisocyanate d'hexaméthylène trimérisé bloqué avec un malonate de diéthyle,
- l'additif inorganique (G1) est une calcite, une fibre de basalte et l'additif organique (G2) est une cellulose microcristalline, un nanowhisker de cellulose, des fibres de cellulose régénérée ou de la farine de bois.

3. Composition réactive de moulage par injection selon la revendication 1 ou 2, comprenant additionnellement
- un ou plusieurs catalyseurs (H)
- et d'autres excipients (I).

4. Composition réactive de moulage par injection selon l'une quelconque des revendications 1 à 3, **caractérisée en ce qu'**elle présente les proportions suivantes :
- de 70 à 80 parts du biopolyester (A),
- de 20 à 30 parts du biopolyester (B),
- de 1 à 25 parts du biopolyester (C),
- de 0,5 à 15 parts du biopolyester (D),
- de 0,5 à 15 parts des biopolyester (E),
- de 0,5 à 20 parts des diisocyanates et/ou polyisocyanates (F),
- de 0,5 à 50 parts d'additifs inorganiques et/ou organiques (G),
- de 0 à 5 parts du catalyseur, ainsi que
- le cas échéant, d'autres excipients,
de telle sorte que les composants se complètent toujours à 100 parts.

5. Composition réactive de moulage par injection selon l'une quelconque des revendications 1 à 4, **caractérisée en ce qu'**elle est mise à disposition sous la forme de granulés.

6. Procédé, destiné à mettre en œuvre la composition réactive de moulage par injection selon l'une quelconque des revendications 1 à 5, **caractérisé en ce que** l'on met à disposition des granulés pré-mélangés comportant les composants indiqués, on les homogénéise à une température comprise entre 70 et 140 °C dans une machine de moulage par injection et on les injecte dans un outil adapté.

7. Procédé selon la revendication 6, **caractérisé**
- **en ce que** l'on introduit additionnellement dans les granulés un ou plusieurs catalyseurs (H)
- et d'autres excipients (1).

8. Procédé selon l'une quelconque des revendications 6 à 7, **caractérisé en ce que** l'on mélange aux granulés de 0 à 5 parts d'un ou de plusieurs catalyseurs (H), ainsi que d'autres excipients (I) pendant le processus de compoundage.

9. Utilisation d'une composition réactive de moulage par injection selon l'une quelconque des revendications 1 à 5 en tant qu'enveloppe ou masse d'enrobage de modules électriques ou électroniques, de circuits ou de cartes de circuit imprimé.

10. Utilisation selon la revendication 9, **caractérisée en ce que** la composition réactive de moulage par injection fait simultanément office de masse d'enrobage et d'enveloppe.
